# EUROPÄISCHE PATENTANMELDUNG

(11) **EP 1 318 055 A2**
(43) Veröffentlichungstag der Anmeldung: **11.06.2003**
(21) Anmeldenummer: 02026736.5
(22) Anmeldetag: 30.11.2002
(51) Int. Cl.: B60S 1/48

(54) **Scheibenwaschanlage mit integrierter Heizeinrichtung**

(30) Priorität: 06.12.2001 DE 10159958
(71) Anmelder: REHAU AG + Co, 95111 Rehau (DE); hde Metallwerk GmbH, 58706 Menden (DE)
(72) Erfinder: Rudlof, Manfred, 95111 Rehau (DE); Geissler, Stefan, 59394 Nordkirchen (DE); Droste, Berthold, 58708 Menden (DE)

(57) **Zusammenfassung**

Die Erfindung betrifft eine Scheibenwaschanlage mit integrierter Heizeinrichtung zum Erwärmen von Windschutzscheiben-Waschwasser insbesondere für Kraftfahrzeuge, mit einen im Wasserbehälter angeordneten und vom Kühlwasser des Motors durchströmten Rohrheizkörper. Der Rohrheizkörper ist als Rippenrohrwärmetauscher 4 aus Aluminium ausgebildet und ist in der Vorlaufleitung 2 der Heizeinrichtung 1 in der Nähe der Entnahmeöffnung der Pumpe für das Waschwasser angeordnet.

## Beschreibung

Die Erfindung betrifft eine Scheibenwaschanlage mit integrierter Heizeinrichtung, insbesondere für Kraftfahrzeuge zum Erwärmen von Windschutzscheiben-Waschwasser mit einem in einem Waschwasserbehälter angeordneten und in einer von Motorkühlflüssigkeit durchströmten Flüssigkeitsleitung liegenden Rohrheizkörper.

In Kraftfahrzeugen, Pkw wie Nutzfahrzeuge, werden Scheibenwaschanlagen zum Aufbringen von Reinigungsflüssigkeit auf Windschutzscheiben wie auch Scheinwerferreinigungsanlagen zum Aufbringen von Reinigungsflüssigkeit auf Frontscheinwerfer eingesetzt. Dabei wird in üblicher Weise ein im Motorraum befindlicher Behälter, der die Reinigungsflüssigkeit aufnimmt, verbunden mit einer Förderpumpe und Schlauchleitungen sowie Düsen eingesetzt. Die Düsen befinden sich im allgemeinen auf der Motorhaube oder auf Scheibenwischerarmen. Die Scheinwerfer werden durch entsprechende Hubdüsen mit Reinigungsflüssigkeit beaufschlagt.
Es ist allgemein bekannt, dass diese Systeme bei kalter Witterung zum Einfrieren neigen und zwar üblicher Weise in der Reihenfolge Düsen - Leitungen - Behälter. Ist das Scheibenwaschsystem teilweise oder gänzlich eingefroren, so ist es bei entsprechend kalter Witterung praktisch unmöglich, die Scheibenwaschanlage noch zum Funktionieren zu bringen. Ferner ist bekannt, dass erwärmte Scheibenreinigungsflüssigkeit für ein besseres Reinigungsergebnis sorgt. Wird eine Scheibenreinigungsflüssigkeit auf ca. 40°- 60°C erhitzt und in dieser Form auf die Scheiben gesprüht, so können die der Scheibenreinigungsflüssigkeit zugesetzten Waschmittel ihre chemische Aktivität besser entfalten und die Reinigungswirkung nimmt in der kurzen Zeit, in der die Reinigungsflüssigkeit auf der Scheibe verbleibt, deutlich zu. Dadurch wird auch die Beanspruchung des Scheibenwischgummis herabgesetzt.
Durch die Erwärmung von Scheibenreinigungsflüssigkeiten wird die Schlierenbildung des Wischbildes deutlich verringert. Im allgemeinen neigen Scheibenwischergummis beim Wischen über eine mehr oder weniger verschmutzte Scheibe zu Schlierenbildung, die von dem Verschleißzustand des Wischgummis abhängt. Die Schlierenbildung liegt in mikroskopisch kleinen Furchen im Scheibenwischerblatt begründet, wobei das Scheibenwischerblatt bei der Bewegung über die Scheibe Flüssigkeitsrückstände auf der Scheibe hinterlässt.

Ist die Scheibenreinigungsflüssigkeit beheizt, so verdunsten diese Wasserrückstände auf der Scheibe sehr schnell, die Schlierenwirkung nimmt für den Fahrer merklich ab. Besonders ausgeprägt ist der Effekt bei Einarmwischern, die sehr große Scheibenflächen bestreichen müssen und demzufolge eine hohe Wischgeschwindigkeit aufweisen, aus der deswegen ein hoher Wischgummiverschleiß resultiert.
Eine Beheizung von Scheibenreinigungsflüssigkeit im Winter hat den Vorteil, dass dieser zur Erzielung eines einwandfreien Waschbildes ohne die Gefahr der Vereisung der Windschutzscheibe und der Wischblätter weniger Frostschutzmittel zugesetzt werden kann. Die Verringerung des Anteils an Frostschutzmittel seinerseits hat den Vorteil, dass dadurch die Lösung von Salzrückständen auf der Windschutzscheibe deutlich verbessert wird. Die im Allgemeinen auf alkoholischen Substanzen basierenden Frostschutzmittel für Scheibenwaschanlagen lösen nämlich Salze sehr schlecht oder gar nicht. Die Salzlösung auf der Windschutzscheibe erfolgt ausschließlich durch den Wasseranteil in der Scheibenreinigungsflüssigkeit. Durch Beheizung des gesamten Scheibenwaschsystems kann der prozentuale Zusatz von Gefrierschutzmitteln in der Scheibenreinigungsflüssigkeit verringert werden und das Wischerbild insbesondere gegenüber Salzverkrustungen auf der Windschutzscheibe wird deutlich verbessert. All diese Vorteile haben in den vergangenen Jahren dazu geführt, dass in Fahrzeugen bereits beheizte Scheibenwaschsysteme eingesetzt werden, bei denen fast immer die Düsen, bei einigen Fahrzeugen aber auch die Scheibenwaschleitungen und die Behälter beheizt werden.

Aus der DE 370 02 754 C2 ist eine Vorrichtung zum Erwärmen von Windschutzscheiben-Waschwasser, insbesondere für Kraftfahrzeuge mit einem in einem Waschwasserbehälter angeordneten und in einer von Motorkühlflüssigkeit durchströmten Flüssigkeitsleitung liegenden Rohrheizkörper bekannt, wobei dem Rohrheizkörper ein in der Flüssigkeitsleitung angeordnetes, den Massenstrom der Motorkühlflüssigkeit steuerndes thermostatisches Ventil zugeordnet ist, um eine Überhitzung des Waschwassers zu vermeiden. Die Rippen umgehen sowohl die Vorlauf- als auch die Rücklaufleitung. Die Herstellung eines derartigen Rohrheizkörpers ist sehr aufwendig, da beide Leitungen die Rippen durchdringen und mit diesen verbunden werden müssen, um einen größtmöglichen Wärmeübergang Rohr - Rippe zu gewährleisten. Des Weiteren weisen solche Rohrheizkörper eine Baugröße auf, die es erforderlich macht, die Waschwasserbehälter mit einer entsprechenden größeren Öffnung für die Montage zu versehen.

Im weiteren ist aus der DE 26 07 507 A1 eine Einfrierverhinderung für Reinigungswasser bekannt. Die hier beschriebene Vorrichtung weist ebenfalls einen als Heizelement ausgelegten, im Waschwasserbehälter angeordneten und von Motorkühlflüssigkeit durchströmten Rohrheizkörper auf. Die Temperatureinstellung erfolgt direkt durch den Fahrer mit der Einstellung der Heizung. Nachteilig bei dieser Vorrichtung wird gesehen, dass es hier zur Überhitzung und damit zur Verflüchtigung der Reinigungszusätze kommt. Des Weiteren können beim nachträglichen Einbau - Einbringung von Bohrungen in die Wände des Waschwasserbehälters - Undichtheiten auftreten, die zum Auslaufen von Waschwasser führen.

Die Auslegung einer solchen Beheizung geschieht im Allgemeinen derart, dass gefordert wird, dass bereits ca. 10 min nach Fahrtbeginn aus einem Waschwasserbehälter mit durchgefrorener Scheibenreinigungsflüssigkeit erste Scheibenreinigungsflüssigkeit gefördert und auf die Windschutzscheibe gespritzt werden kann. Nach ca. 15 min muss die Scheibenreinigungsflüssigkeit im Waschwasserbehälter soweit aufgetaut sein, dass größere Mengen Scheibenreinigungsflüssigkeit verwendet werden kann. Nach ca. 20 min sollte ein Kanal durch den Eisblock bis zur Einfüllöffnung des Waschwasserbehälters aufgeschmolzen sein, so dass ein Nachfüllen mit Scheibenreinigungsflüssigkeit möglich ist.
Durch das erstmalige Spritzen 10 min nach Fahrtantritt wird sichergestellt, dass nicht noch sehr kalte Scheibenreinigungsflüssigkeit auf die völlig unterkühlte Windschutzscheibe trifft. Nach ca. 10 min Fahrt wird davon ausgegangen, dass die Windschutzscheibe durch die Defroster-Wirkung der Scheibenreinigungsflüssigkeit angewärmt ist. Ferner wird davon ausgegangen, dass bei extrem kaltem Wetter nach Fahrtantritt nicht sofort gespritzt werden muss, da dann im allgemeinen noch keine starke Verschmutzung erfolgt. Die Verschmutzung erfolgt erst dann, wenn nach einiger Fahrtdauer die Windschutzscheibe sich erwärmt und gleichzeitig von anderen Fahrzeugen Schmutz auf die Scheibe gewirbelt wird. Zu diesem Zweck muss dann eine ausreichend große Menge Scheibenreinigungsflüssigkeit im Waschwasserbehälter aufgetaut und verfügbar sein.

Die Beheizung des Waschwasserbehälters wird heute nach dem Stande der Technik so durchgeführt, dass ein Wärmetauscher aus einem gezogenen Stahlrohr im Waschwasserbehälter fest eingebaut ist.
Durch die Formgebung des Wärmetauschers ist sichergestellt, dass die Wendeln dieses Wärmetauschers möglichst nahe an die Pumpe kommen, so dass die Scheibenreinigungsflüssigkeit möglichst in der Nähe der Pumpe aufgetaut wird. Dieser Wärmetauscher wird durch Kühlwasser aus dem Kühlkreislauf des Motors gespeist. Der Kühlkreislauf eines Kraftfahrzeugmotors ist im Allgemeinen zweigeteilt:
Der erste Kühlkreislauf (kleiner Kühlkreislauf) umfasst lediglich die Innenraumheizung des Kraftfahrzeuges und den Motor.
Der zweite (große) Kühlkreislauf umfasst auch den Kraftfahrzeugkühler.
Im allgemeinen wird im Kaltstart eines Fahrzeuges nur der kleine Kühlkreislauf mit der Abwärme des Motors beaufschlagt. Damit ist sichergestellt, dass die Abwärme des Motors zunächst für die Insassen zur Verfügung steht. Erst bei weiterer Aufwärmung des Motors und
des Kühlkreislaufes wird ein Thermoventil betätigt, das dann den großen Kühlkreislauf frei gibt und für die notwendige Kühlung des Motors sorgt. Zugleich wird damit ein schnelles Erreichen der Betriebstemperatur des Motors und damit größtmögliche Motorschonung sichergestellt.
Die Wärmetauscher für Scheibenwaschanlagen werden im Allgemeinen in dem kleinen Kühlkreislauf eingeschaltet oder über einen zwischen dem kleinen und dem großen Kühlkreislauf noch zusätzlich eingebrachten Kühlkreislauf.
Im Zuge der Bemühungen zur Energieeinsparung stellen besonders moderne Dieselmotoren, aber auch moderne Otto-Motoren, sehr wenig Abwärme zur Verfügung, d.h., dass für die Wasserheizung in manchen Fahrzeugen zu wenig Abwärme des Motorkühlkreislaufes zur Verfügung gestellt wird, um die Funktion der Scheibenwaschanlage und deren Beheizung in den oben angegebenen Zeiten zu garantieren. Es hat diesbezüglich bereits Versuche gegeben, die Waschwasserbehälter elektrisch zu beheizen. Dies führte aber zu einer zusätzlichen Belastung des elektrischen Systems des Kraftfahrzeugs. Die in Waschwasserbehältern eingefrorenen Wassermengen und die notwendigen Energien einschließlich der Umwandlungsverluste durch den Generator und Leistungsverluste sowie Abwärme erreichen zur effektiven Beheizung eines Scheibenwaschbehälters mittels des elektrischen Bordnetzes Größenordnungen im Leistungsbedarf von bis zu 7 PS, was im Kurzstreckenverkehr eines Automobils alle Bemühungen zu Energieeinsparung wieder zunichte machen würde. Daher haben sich elektrische Beheizungen von Waschwasserbehältern bislang nicht durchsetzen können.

Der Erfindung liegt die Aufgabe zugrunde, eine Scheibenwaschanlage mit integrierter Heizeinrichtung zu schaffen, die die verfügbare Abwärme des Motors möglichtst wirtschaftlich nutzt, d.h. gegenüber den heute gebräuchlichen Wärmetauschern aus Stählen die Energie im Wärmetauscher möglichst verlustlos an das Waschwasser weiterleitet, die das Ansprechverhalten des Wärmetauschers nach dem Kaltstart deutlich verbessert und gleichzeitig zu einer Gewichts- und Kosteneinsparung führt.

Erfindungsgemäß wird die Aufgabe dadurch gelöst, dass im Waschwasserbehälter der Scheibenwaschanlage eine Heizeinrichtung integriert ist, die mit dem Kühlwasserkreislauf des Motors verbunden ist. Im Vorlauf der Heizeinrichtung ist ein als Rippenrohr ausgebildeter Wärmetauscher angeordnet, wobei dieser sich in der Nähe der Pumpe zur Entnahme von Waschwasser befindet. Der Rippenrohrwärmetauscher ist vorzugsweise aus Aluminium ausgebildet und im Vorlaufrohr eingesetzt. Die Verbindung kann durch Löten oder Schweißen erfolgen. Eine weitere Möglichkeit der Ausbildung des Rippenrohrwärmetauschers besteht darin, diesen hülsenförmig auszubilden und diesen auf das Vorlaufrohr aufzustecken, sowie diesen an der entsprechenden Stelle durch hydrostatische Aufweitung des Vorlaufrohres an diesen zu fixieren.
Des Weiteren kann der Rippenrohrwärmetauscher als Bimetallrohr ausgebildet sein. Bei dieser Ausführung wird ein nahtlos gezogenes Aluminium- oder Stahlrohr verwendet, das an den Enden die notwendigen Profilierungen für die Aufnahme einer Schlauchverbindung aufnehmen kann. Die Wärmeübertragung wird durch einen aufgeschobenen Aluminium-Rippenrohrwärmetauscher realisiert. Die Verbindung zwischen Rippenrohrwärmetauscher und Innenrohr wird durch hydrostatische Aufweitung des Innenrohres bewerkstelligt, so dass sich das Innenrohr nahtlos an den Innendurchmesser des Rippenrohrwärmetauschers anlegt.
Die Herstellung der Rippenrohre kann sowohl im Walzverfahren als auch durch geeignete Fügeverfahren für die Rippen, beispielsweise durch Pressen, Einwalzen, Schweißen usw., erfolgen. Das Vorlaufrohr und das Rücklaufrohr der Heizeinrichtung sind durch eine Schlaufe derart verbunden, dass diese annähernd parallel zum Waschwasserbehälterboden verläuft und die Entnahmeöffnung der Pumpe für das Waschwasser umfasst. Es besteht weiterhin vorteilhaft die Möglichkeit, den Rippenrohrwärmetauscher im Bereich der Schlaufe anzuordnen.

Der Vorteil liegt insbesondere in dem Einsatz von Aluminium für den Ripprohrwärmetauscher. Aluminium hat eine wesentlich höhere Wärmeleitfähigkeit als Stahl. Durch die Ausbildung der Oberfläche in Rippenform wird die wärmeabgebende Oberfläche gegenüber der Scheibenreinigungsflüssigkeit deutlich erhöht, so dass bereits bei geringerem Wärmeangebot im Wärmetauscher durch die Motorkühlflüssigkeit eine wesentlich höhere Auftauwirkung erzielt wird.
Gleichzeitig kann das Gewicht des Wärmetauschers durch das geringere spezifische Gewicht von Aluminium gegenüber Stahl deutlich verringert werden.

Die Rippen des Rippenrohrs werden zweckmäßiger Weise im Walzverfahren hergestellt. Bei diesem Verfahren werden gezogene Aluminiumrohre in der äußeren Oberfläche nahtlos so gewalzt, dass quer zur Längsachse des Rohres Rippen entstehen, vorzugsweise in einem Verhältnis von Rippenhöhe zur Rippendicke von 2:1 bis 30:1. Das ideale Verhältnis von Rippenhöhe zu Rippenbreite bemisst sich nach den Erfordernissen der Wärmeübertragung, d.h. insbesondere nach der zu beheizenden Scheibenreinigungsflüssigkeit.

Bei einer weiteren Ausbildung des hergestellten Rippenrohrwärmetauschers besteht nur der Teil - Rippenrohr - aus Aluminium, der sich in der Nähe der Pumpe des Waschwasserbehälters befindet, um dort zunächst die größte Wärmemenge im Waschwasserbehälter freizusetzen. Die übrigen Bereiche der Heizeinrichtung können aus glattem Aluminiumrohr, vorteilhaft in nahtlos gezogener Form, ausgebildet sein. Für die Ausführung des Rippenrohrwärmetauschers sind in zweckmäßiger Weise bei Verwendung üblicher Scheibenreinigungsflüssigkeiten und Kühlflüssigkeiten korrosionsfeste Legierungen wie z.B. AISMg 0,5 oder AISMg 1,0 verwendbar.

Anhand eines Ausführungsbeispiel soll die Erfindung näher beschrieben werden.
Die dazugehörige Figurl zeigt die Heizeinrichtung 1 in schematischer Darstellung.

Diese besteht aus der Vorlaufleitung 2 und der Rücklaufleitung 3, die über die Schlaufe 5 miteinander verbunden sind. Die Vorlaufleitung 2 und die Rücklaufleitung 3 sind an den Kühlwasserkreislauf des hier nicht dargestellten Fahrzeugmotors angeschlossen. Um eine Überhitzung der Scheibenreinigungsflüssigkeit zu vermeiden, ist in der Rücklaufleitung 3 ein Thermostatventil 6 angeordnet.
In der Vorlaufleitung 2 ist der aus Aluminium bestehende Rippenrohrwärmetauscher 4 angeordnet. Dieser befindet sich in der Nähe der nicht dargestellten Waschwasserpumpe. Die Heizeinrichtung 1 befindet sich in einem nicht näher dargestellten Waschwasserbehälter. Der Rippenrohrwärmetauscher 4, der separat hergestellt wird, ist mit der Vorlaufleitung 2 beispielsweise durch Schweißen verbunden. Die Herstellung des Rippenrohrwärmetauschers 4 erfolgt zweckmäßigerweise im Walzverfahren. Bei diesen Verfahren werden gezogene Aluminiumrohre auf der äußeren Oberfläche nahtlos so gewalzt, dass quer zur Längsachse des Rohres Rippen entstehen.
Die Funktionsweise der erfindungsgemäßen Scheibenwaschanlage mit integrierter Heizungseinrichtung 1 ist folgende: Nach dem Start des Motors wird die beim Verbrennungsprozess entstehende Wärme nach und nach an das Kühlwasser des Motors abgegeben. Das erwärmte Kühlwasser durchströmt den Kühlkreislauf und somit die in diesem Kühlkreislauf eingebundene Heizungseinrichtung 1 für die Scheibenreinigungsflüssigkeit. Zunächst wird die Scheibenreinigungsflüssigkeit in der näheren Umgebung des Rippenrohrwärmetauschers 4 erwärmt. Da dieser aus Aluminium besteht und Aluminium eine sehr gute Wärmeleitfähigkeit besitzt, erfolgt die Übertragung der Wärme an die Scheibenreinigungsflüssigkeit schon bei relativ niedrigen Kühlwassertemperaturen. Die Anordnung des Rippenrohrwärmetauscher 4 in der Nähe der Entnahmeöffnung der Pumpe für die Scheibenreinigungsflüssigkeit sorgt vorteilhafter Weise dafür, dass in kurzer Zeit in diesem Bereich erwärmtes Waschwasser vorliegt.
Der Wärmedurchlass, d.h. der Massenstrom an erwärmten Kühlwasser des Motors, durch die Heizeinrichtung 1 wird mittels des Thermostatventils 6 gesteuert. Dadurch kann eine Überhitzung der Scheibenreinigungsflüssigkeit verhindert werden. Das Thermostatventil 6 wird derart gesteuert, das dieses bei Erreichen einer vorgegebenen Temperatur der Scheibenreinigungsflüssigkeit den Durchfluss von Kühlwasser durch die Vorlaufleitung 2 und die Rücklaufleitung 3 unterbricht. Die Verwendung der Heizeinrichtung 1 aus Aluminium bzw. mit einen aus Aluminium bestehenden Rippenrohrwärmetauscher 4 in Scheibenwaschanlagen hat zur Folge, dass in der gleichen Zeit gegenüber herkömmlichen aus Stahl bestehenden Wärmetauschern ein größeres Flüssigkeitsvolumen erwärmt bzw. aufgetaut werden kann. Des weiteren sind Rippenrohrwärmetauscher 4 aus Aluminium wesentlich leichter und beständig gegen Korrosion bzw. die Zusätze der Scheibenreinigungsflüssigkeit.

### Bezugszeichenaufstellung

- 1 -: Heizeinrichtung
- 2 -: Vorlaufleitung
- 3 -: Rücklaufleitung
- 4 -: Rippenrohrwärmetauscher
- 5 -: Schlaufe
- 6 -: Thermostatventil

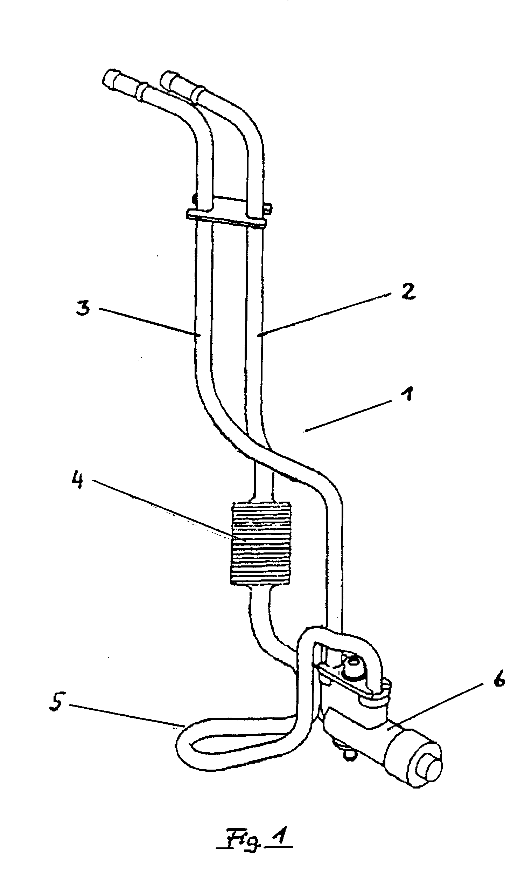

## Patentansprüche

1. Scheibenwaschanlage mit integrierter Heizungseinrichtung, insbesondere für Kraftfahrzeuge zum Erwärmen von Windschutzscheiben-Waschwasser, mit einem in einem Waschwasserbehälter angeordneten und in einer von Motorkühlflüssigkeit durchströmten Flüssigkeitsleitung liegenden Rohrheizkörper, wobei dem Rohrheizkörper ein in der Flüssigkeitsleitung angeordnetes, den Massenstrom der Motorkühlflüssigkeit steuerndes thermostatisches Ventil zugeordnet ist,
**dadurch gekennzeichnet,**
**dass** in der Vorlaufleitung (2) der Heizeinrichtung (1) ein als Rippenrohr ausgebildeter Wärmetauscher (4) angeordnet ist, wobei dieser sich im Waschwasserbehälter in der Nähe der Pumpe zur Entnahme von Waschwasser befindet.

2. Scheibenwaschanlage mit integrierter Heizeinrichtung nach Anspruch 1, **dadurch gekennzeichnet, dass** der als Rippenrohr ausgebildete Wärmetauscher (4) aus Aluminium oder einer Aluminiumlegierung besteht.

3. Scheibenwaschanlage mit integrierter Heizeinrichtung nach Anspruch 1 und 2,
**dadurch gekennzeichnet, dass** der Wärmetauscher (4) hülsenförmig ausgebildet ist und durch Aufweitung des durchgeführten Vorlaufrohres (2) mit diesem verbunden ist.

4. Scheibenwaschanlage mit integrierter Heizeinrichtung nach Anspruch 1 bis 3 **dadurch gekennzeichnet, dass** der als Rippenrohr ausgebildete Wärmetauscher (4) als Bimetallrohr ausgeführt ist.

5. Scheibenwaschanlage mit integrierter Heizeinrichtung nach Anspruch 1 bis 4, **dadurch gekennzeichnet, dass** die Vorlaufleitung (2) und die Rücklaufleitung (3) über eine Schlaufe (5) derart miteinander verbunden sind, dass diese annähernd parallel zum Boden des Waschwasserbehälters verläuft und die Entnahmeöffnung der Pumpe für das Waschwasser umfasst.

6. Scheibenwaschanlage mit integrierter Heizeinrichtung nach Anspruch 1 bis 5, **dadurch gekennzeichnet, dass** der als Rippenrohr ausgebildete Wärmetauscher (4) im Bereich der Schlaufe (5) angeordnet ist.

7. Scheibenwaschanlage mit integrierter Heizeinrichtung nach Anspruch 1 bis 6, **dadurch gekennzeichnet, dass** das Verhältnis von Rippenhöhe zu Rippenbreite im Bereich von 2:1 bis 30:1 liegt.
